# EUROPEAN PATENT APPLICATION

(11) **EP 1 710 679 A2**
(43) Date of publication of application: **11.10.2006**
(21) Application number: 06111647.1
(22) Date of filing: 23.03.2006
(51) Int. Cl.: G06F 3/12

(54) **Printing system, information processing apparatus and program**

(30) Priority: 28.03.2005 JP 2005093083; 31.01.2006 JP 2006022486
(71) Applicant: Canon Finetech Inc., Ibaraki 303-8503 (JP)
(72) Inventor: Ueda, Kenji, c/o Canon Finetech Inc., Joso-shi, Ibaraki 303-8503 (JP); Yumoto, Chiharu, c/o Canon Finetech Inc., Joso-shi, Ibaraki 303-8503 (JP)
(74) Representative: TBK-Patent

(57) **Abstract**

In forming an image by using a plurality of printing apparatuses, one print data generation apparatus is connected with a plurality of print data transmission apparatuses to reliably communicate print data between these apparatuses. For that purpose, a plurality of shared work areas are used each of which is shared by a print data generation PC (101) and a plurality of print data transmission PCs (103, 104). The print data generation PC (101) outputs a plurality of pieces of print data to the plurality of corresponding shared work areas. The plurality of print data transmission PCs (103, 104) transmit the print data in each of the shared work areas to the corresponding printing apparatus (105, 106).

## Description

The present invention relates to a printing system, an information processing apparatus and a program that print an image by using a plurality of printing apparatus.

Generally, in printing an image by controlling a printing apparatus by a personal computer, a printer driver (program) is first installed in the computer. At this time, an output port on the computer to which the printing apparatus is connected is selected. Next, an application (program) is started to lay out an image to be printed and then the image is selected by the printer driver for printing.

As described above, the computer and the printing apparatus normally have a one-to-one correspondence, and one application selects one printer driver to generate one piece of print data.

If a single computer is assigned with the generation of print data and the transfer of the print data to the printing apparatus, the computer is loaded with a heavy burden.

Such a burden can be reduced by having the generation of print data executed by one computer and the transfer of the print data to the printing apparatus by another. If the print data generation computer (print data generation apparatus) and the print data transmission computer (print data transmission apparatus) are in a one-to-one relation, a destination to which the former computer outputs the image data is only the latter computer and thus there is no need for the user to specify the destination of the image data.

However, if a single print data generation computer is connected with a plurality of print data transmission computers, no method has been available to realize communication of the print data among these computers.

An object of this invention is to provide a printing system, an information processing apparatus and a program which, in printing an image using a plurality of printing apparatus, can connect one print data generation apparatus to a plurality of print data transmission apparatuses to establish a reliable communication of print data among the apparatuses.

Another object of this invention is to provide a printing system, an information processing apparatus and a program which can improve throughput of the system as a whole by having the print data generation apparatus and the print data transmission apparatus execute their functions efficiently.

In a first aspect of the present invention, there is provided a printing system comprising:
a print data generation apparatus for generating image data;
a printing apparatus for forming an image in a print area on a print medium based on the image data; and
a print data transmission apparatus for transmitting the image data generated by the print data generation device to the printing apparatus; wherein
a plurality of the printing apparatuses are provided and allocated to print areas on the print medium and can form images in the respective print areas,
a plurality of the print data transmission apparatuses are provided for the plurality of the printing apparatuses respectively,
the print data generation apparatus can generate a plurality of pieces of the print data corresponding one-to-one to the plurality of the printing apparatuses,
a plurality of shared work areas are provided which are shared by the individual print data transmission apparatuses and the print data generation apparatus,
the print data generation apparatus outputs the individual pieces of the print data to the corresponding shared work areas, and
each of the print data transmission apparatuses sends the print data in the associated shared work area to the corresponding printing apparatus.

In a second aspect of the present invention, there is provided an information processing apparatus to generate a plurality of pieces of print data corresponding one-to-one to a plurality of printing apparatuses, output the plurality of pieces of print data to a plurality of print data transmission apparatuses corresponding one-to-one to the plurality of printing apparatuses and have the plurality of printing apparatus form an image in a print area on a print medium,
wherein the plurality of pieces of print data are print data used to form images in print areas on the print medium allocated one-to-one to the plurality of printing apparatuses, and
wherein the print data corresponding one-to-one to the plurality of print data transmission apparatuses are output to a plurality of shared work areas each shared by the information processing apparatus and each of the print data transmission apparatuses.

In a third aspect of the present invention, there is provided a program to generate a plurality of pieces of print data corresponding one-to-one to a plurality of printing apparatuses, output the plurality of pieces of print data to a plurality of print data transmission apparatuses corresponding one-to-one to the plurality of printing apparatuses and have the plurality of printing apparatuses form an image in a print area on a print medium,
wherein the plurality of pieces of print data are print data used to form images in print areas on the print medium allocated one-to-one to the plurality of printing apparatuses, and
wherein the program causes a computer to output the print data corresponding one-to-one to the plurality of print data transmission apparatuses to a plurality of shared work areas each shared by the program and each of the print data transmission apparatuses.

With this invention, a plurality of shared work areas are used each of which is shared by the print data generation apparatus and each of the plurality of print data transmission apparatuses. The print data generation apparatus outputs the plurality of pieces of print data to the corresponding shared work areas, and the plurality of print data transmission apparatuses transmit the print data in each of the shared work areas to the corresponding printing apparatus. The print data therefore can be reliably transmitted from one print data generation apparatus to the plurality of print data transmission apparatuses through the plurality of shared work areas.

Thus, the print data generation apparatus can determine which print data corresponding to which print data transmission apparatus should be generated. The print data generation apparatus can also generate the print data corresponding to all of the print data transmission apparatuses connected to it or generate the print data corresponding to at least one of the print data transmission apparatuses. That is, the print data generation apparatus can include a print data generation mode to generate the print data corresponding to all of the print data transmission apparatuses connected to it and/or a print data generation mode to generate the print data corresponding to at least one of the print data transmission apparatuses. The print data generation apparatus can also select the shared work area as an output destination of the print data based on the identify data of the printing apparatus entered via the print data transmission apparatus.

The print data generation apparatus can simultaneously generate print data to be output to the plurality of print data transmission apparatuses. In that case, the print data generation apparatus can create a plurality of pieces of print data in such a manner that these print data match a plurality of print areas on the print medium in one-to-one correspondence. The print data generation apparatus and the plurality of print data transmission apparatuses can communicate with each other through a network cable.

Further, by having the print data generation apparatus and the print data transmission apparatus operate under the control of different central processing units, these apparatuses can be made to perform efficiently, improving throughput of the system as a whole. The print data generation apparatus can also cooperate with at least one print data transmission apparatus to form one information processing apparatus.

The above and other objects, effects, features and advantages of the present invention will become more apparent from the following description of embodiments thereof taken in conjunction with the accompanying drawings.
Fig. 1 is an outline configuration diagram of a printing system in a first embodiment of this invention;
Fig. 2 is an explanatory diagram showing an example of a network assignment folder displayed on a print data generation personal computer (PC) of Fig. 1 in which to specify a destination of the print data;
Fig. 3 is an explanatory diagram showing an example of a print data storage folder displayed on a print data transmission PC of Fig. 1;
Fig. 4 is an explanatory diagram showing a print data destination specification dialog box displayed on the print data generation PC of Fig. 1 to specify the destination of the print data;
Fig. 5 is an explanatory diagram showing a print data layout screen displayed on the print data generation PC of Fig. 1;
Fig. 6 is an explanatory diagram showing a flow of communication data in the printing system of Fig. 1;
Fig. 7 is a flow chart showing data processing performed in the printing system of Fig. 1;
Fig. 8 is an explanatory diagram showing a relation between the print data and a print image in the printing system of Fig. 1;
Fig. 9 is a diagram showing a relationship between Figs. 9A and 9B, Figs 9A and 9B are flow charts showing data processing executed by a printing system in a second embodiment of this invention;
Fig. 10 is an outline perspective view showing an essential portion of a printing system in a third embodiment of this invention;
Fig. 11 is an outline perspective view of a printing system in a fifth embodiment of this invention;
Fig. 12 is a block diagram of a control system in the printing system of Fig. 11;
Fig. 13 is a flow chart showing transfer data generation processing in the printing system of Fig. 11;
Fig. 14 is a flow chart showing transfer control processing in the printing system of Fig. 11;
Fig. 15 is an outline configuration of a printing system in a sixth embodiment of this invention;
Fig. 16 is a block diagram of a control system in the printing system of Fig. 15;
Fig. 17 is a flow chart showing transfer data generation processing in the printing system of Fig. 15;
Fig. 18 is a flow chart showing transfer control processing in the printing system of Fig. 15; and
Fig. 19 is a flow chart showing data reception processing in the printing system of Fig. 15.

Now, embodiments of this invention will be described by referring to the accompanying drawings.

### (First Embodiment)

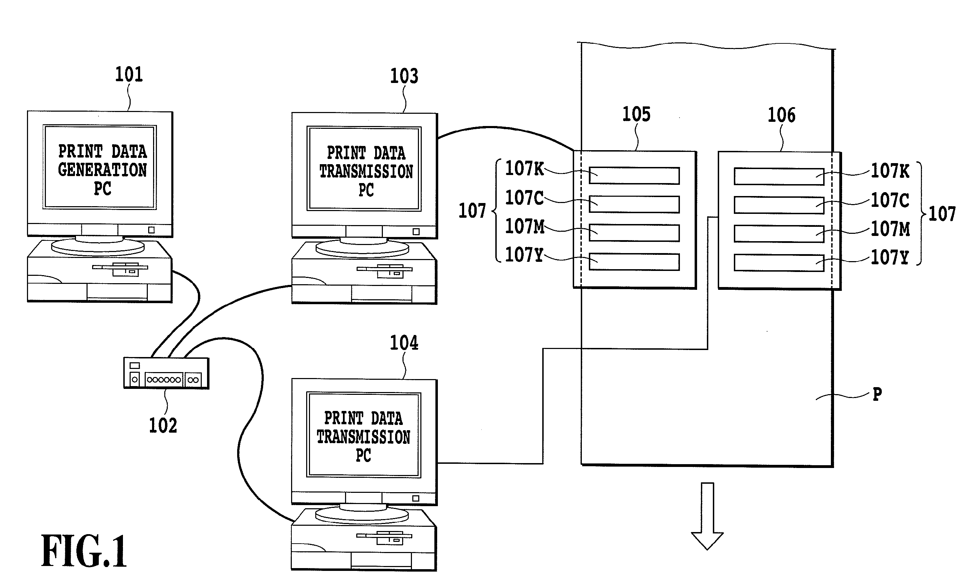

Fig. 1 is an outline configuration of a printing system in this invention.

A personal computer for generating print data (hereinafter referred to also as a "print data generation PC") 101 is a print data generation apparatus to generate print data to be printed by a plurality of printing apparatuses 105 and 106. The print data generation PC 101 is connected through a communication interface having a network hub 102 to personal computers for transmitting the print data (also referred to as "print data transmission PCs") 103 and 104. The communication interface may include, for example, a network cable, a USB cable and a wireless LAN. In this example, the print data generated by the print data generation PC 101 is transferred to the print data transmission PC 103 or 104 through the network cable.

The print data transmission PCs 103 and 104 are connected to the associated printing apparatuses 105 and 106 through the communication interface. The communication interface may use a network, a USB and an IEEE1284. In this example, the print data transmission PCs 103 and 104 send the print data to their associated printing apparatuses 105 and 106 through USB.

The printing apparatuses 105 and 106 in this example are printer units as independent engines that operate individually according image data received from the associated print data transmission PCs 103 and 104. The print medium P is transported in a direction of arrow in Fig. 1 by a transport mechanism not shown and the printing apparatuses 105 and 106 are arranged in a direction of width of the print medium P. The printing apparatuses 105 and 106 each have ink jet print heads extending in the direction of width of the print medium P and eject ink from the ink jet print heads according to the image data received from the associated print data transmission PCs 103 and 104. The print data transmission PCs 103 and 104, in synchronism with the operation of the transport mechanism not shown to transport the print medium, transmits to the printing apparatuses 105 and 106 the print data corresponding to the transport position of the print medium P.

As described later, the print data generation PC 101 generates print data to be printed by the printing apparatus 105 and print data to be printed by the printing apparatus 106 and sends these print data to the print data transmission PCs 103 and 104. That is, the image data to be printed on the print medium is created in two separate parts, the print data for the printing apparatus 105 and the print data for the printing apparatus 106. These image data are transmitted from the print data transmission PCs 103 and 104 to the associated printing apparatuses 105 and 106.

The printing apparatuses 105 and 106 in this example each have four ink jet print heads 107 (107Y, 107M, 107C, and 107K) for ejecting yellow (Y), magenta (M), cyan (M), and black (K) ink, respectively. The print heads 107 each have a plurality of nozzles arrayed in the direction of width of the print medium P and ejects ink from these nozzles according to the print data to form ink dots on the print medium P. In this example, the printing apparatus 105 prints an image in a left-side area on the print medium P of Fig. 1 and the printing apparatus 106 prints an image in a right-side area on the print medium P.

The printing apparatuses 105 and 106 are controlled independently of each other to form an image based on the image data received from the associated print data transmission PCs 103 and 104. Therefore, these printing apparatuses 105 and 106 form independent printer units.

The print data generation PC 101 executes, under the control of the operating system, an application (program) to generate image data and a print control program (printer driver). In this example, "Windows (registered trademark)" is used as the operating system. The print data transmission PCs 103 and 104 receive print data generated by the print data generation PC 101, send them to the associated printing apparatuses 105 and 106 and monitor statuses of the printing apparatuses 105 and 106.

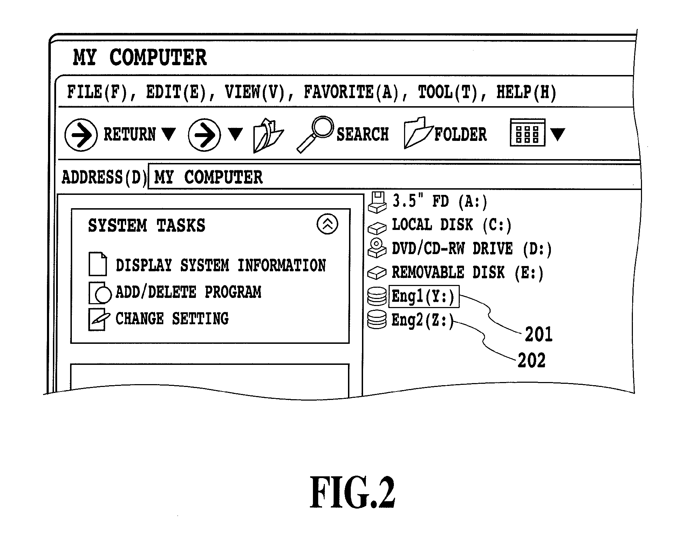

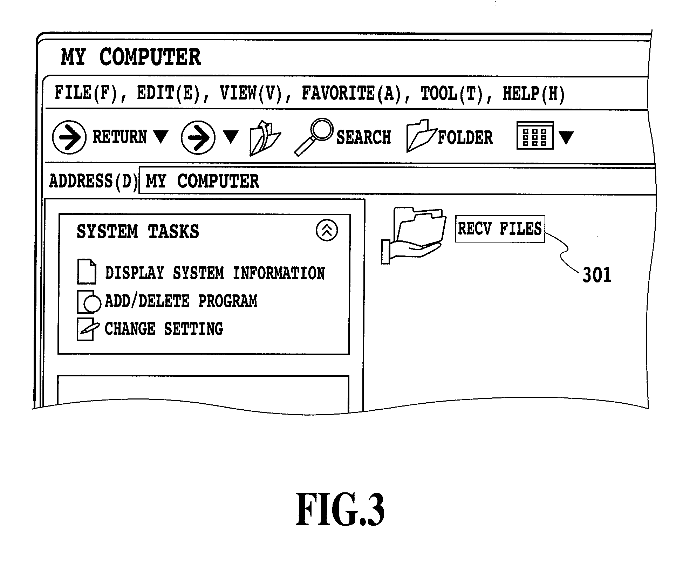

Fig. 2 shows a network assignment function of "Windows (registered trademark)" as displayed on the print data generation PC 101. In this example, locations where print data to be sent to the print data transmission PCs 103 and 104 are generated are allocated. More specifically, a print data storage folder 201 of the print data transmission PC 103 is allocated to (Y) and a print data storage folder 202 of the print data transmission PC 104 to (Z). Fig. 3 shows print data storage folders 201 and 202 of the print data transmission PCs 103 and 104 as displayed on a screen of the print data generation PC 101.

The print data generation PC 101 is required to hand the generated print data to the print data transmission PC 103 or 104. For that purpose, a shared work area is created which can be referenced for data by both the print data generation PC 101 and the print data transmission PCs 103 and 104. The print data generation PC 101 generates the print data in the shared work area. The print data transmission PCs 103 and 104 monitor the shared work area at all times and, upon detecting newly written print data in the shared work area, transmit the print data to the associated printing apparatuses 105 and 106 for printing.

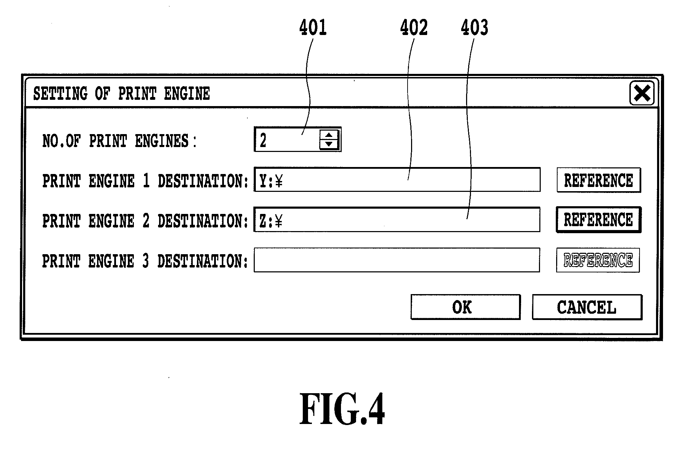

Fig. 4 is an explanatory diagram showing a print setting screen in a print data generation application running on the print data generation PC 101.

A print engine number 401 is an item to be set regarding the number of printing apparatus (printer units) used to print the print data generated by the application. In this example, two printing apparatuses 105 and 106 are used, so "2" is set in the print engine number. An output destination 402 for the print engine 1 is an item to be set concerning a shared work area that can be referenced by both the print data generation PC 101 and the print data transmission PC 103. In the shared work area is stored print data generated by the application of the print data generation PC 101 and to be printed by the printing apparatus 105. In this example, as the shared work area the location "Y" allocated for the print data storage folder 201 (see Fig. 2) is specified.

Similarly, the output destination 403 for the print engine 2 is an item to be set concerning a shared work area that can be referenced by both the print data generation PC 101 and the print data transmission PC 104. In the shared work area is stored print data generated by the application of the print data generation PC 101 and to be printed by the printing apparatus 106. In this example, as the shared work area the location "Z" allocated for the print data storage folder 202 (see Fig. 2) is specified.

Specifying the shared work area in this manner can associate the print data generated by the application of the print data generation PC 101 with the printing apparatuses 105 and 106. In this example, two printing apparatus 105, 106 are set. It is also possible to set three or more printing apparatus.

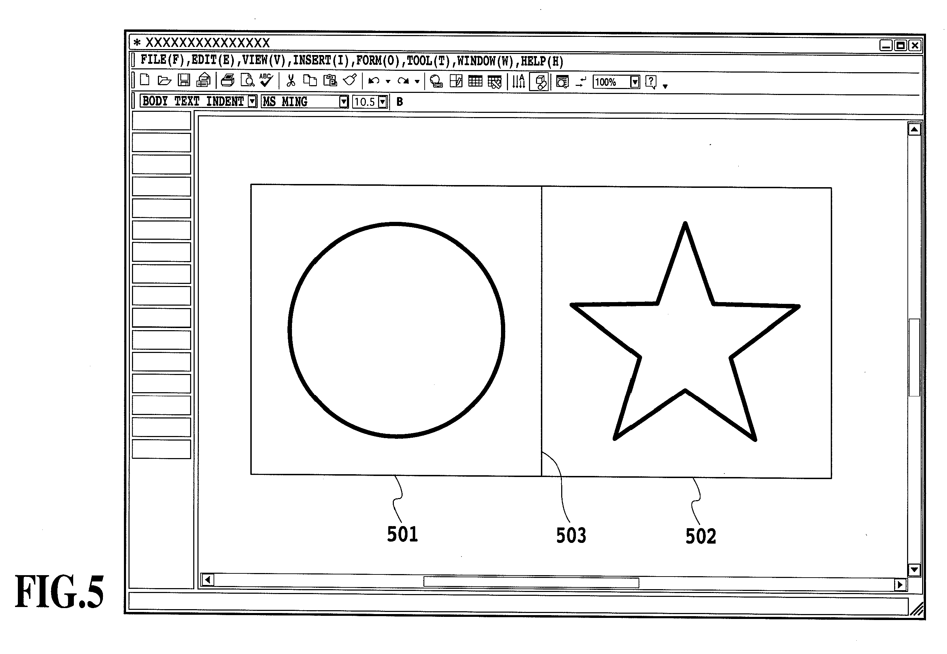

Fig. 5 is an explanatory diagram showing a setting screen on the print data generation PC 101 for setting a layout of print data to be printed by the printing apparatuses 105 and 106.

In this example, the print data to be printed by the printing apparatuses 105 and 106 are laid out on the screen with a boundary line 503 on the screen representing a boundary between the printing apparatuses 105 and 106. That is, in a print area 501 on the left side of the screen the print data to be printed by the left-hand side printing apparatus 105 of Fig. 1 is laid out. Similarly, the print data to be printed by the right-hand side printing apparatus 106 of Fig. 1 is laid out in a print area 502.

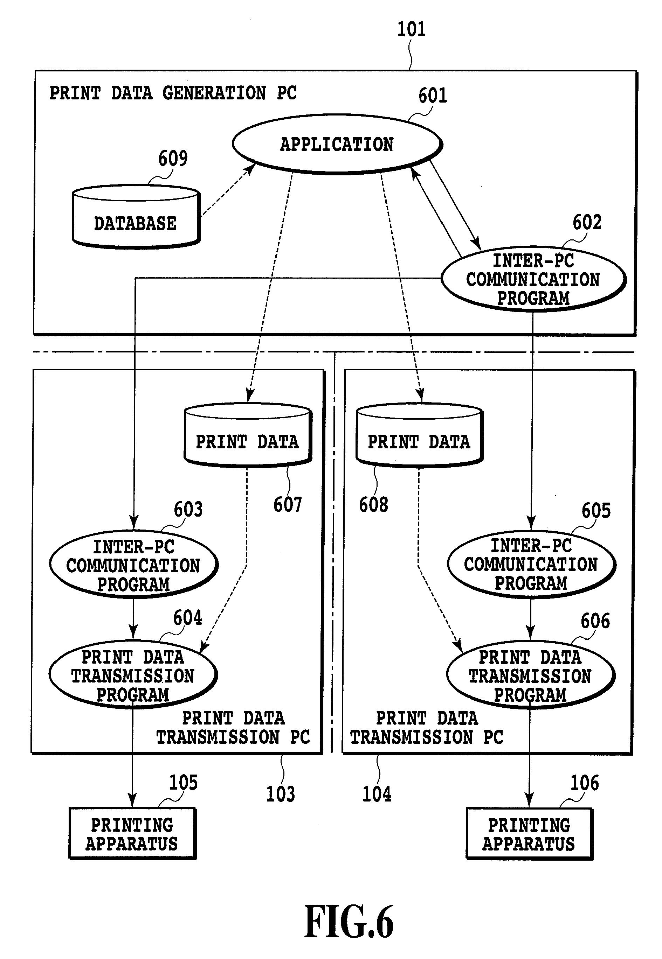

Fig. 6 shows a program relation between the print data generation PC 101 and the print data transmission PCs 103 and 104.

The print data generation PC 101 includes an application (program) 601 to generate print data and a program 602 to communicate with the print data transmission PCs 103 and 104. The print data transmission PCs 103 and 104 include programs 603 and 605 to communicate with the print data generation PC 101, and print data transmission programs 604 and 606 to send print data to the printing apparatuses 105 and 106.

The communication program 602 in the print data generation PC 101, when the application 601 has finished the generation of print data, notifies the communication program 603 in the print data transmission PC 103 that the generation of the print data is completed (print data generation completion message). The communication program 603 in the print data transmission PC 103 that has received the print data generation completion message notifies a print data transmission program 604 of the completion of the print data generation. The print data transmission program 604 now sends the print data 607 generated by the application 601 in the print data generation PC 101 to the printing apparatus 105.

Similarly, when the application 601 has finished the generation of print data, the communication program 602 in the print data generation PC 101 informs the communication program 605 in the print data transmission PC 104 of the completion of the print data generation (print data generation completion message). The communication program 605 in the print data transmission PC 104, upon receiving the print data generation completion message, informs the print data transmission program 606 that the generation of the print data has ended. The print data transmission program 606 then sends the print data 608 generated by the application 601 in the print data generation PC 101 to the printing apparatus 106.

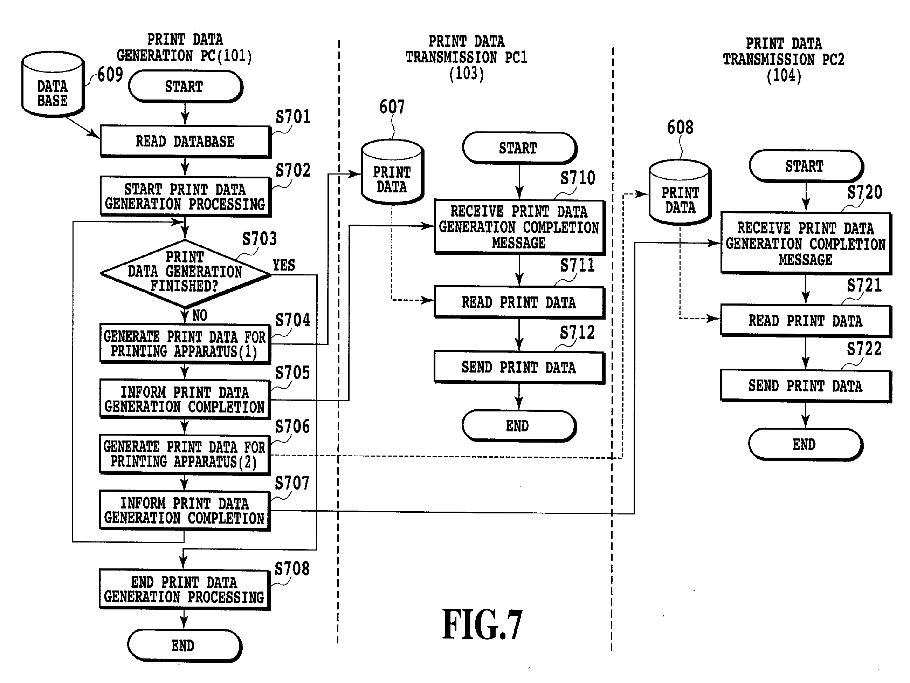

Fig. 7 is a flow chart showing a data transmission and reception procedure between the print data generation PC 101 and the print data transmission PCs 103 and 104.

The application 601 in the print data generation PC 101 reads a database 609 (step S701) and, according to an instruction from the user, starts the generation of print data (step S702). The print data generation PC 101 first generates print data 607 for the printing apparatus (1) 105 in the shared work area in the print data transmission PC(1) 103 (step S704). When the generation of the print data 607 has finished, the print data generation PC 101 notifies the print data transmission PC(1) 103 of the completion of the generation of the print data 607 (print data generation completion message) (step S705).

At this time, the application 601 in the print data generation PC 101, as described above, notifies the communication program 602 in the print data generation PC 101 that the generation of the print data 607 is completed. The communication program 602 informs the print data transmission PC(1) 103 of the completion of the generation of the print data 607 (print data generation completion message).

The communication program 603 in the print data transmission PC(1) 103, upon receiving the print data generation completion message (step S710), informs the print data transmission program 604 that the generation of the print data 607 is finished. The print data transmission program 604 reads the print data 607 from the shared work area (step S711) and sends the print data 607 to the printing apparatus (1) 105.

Similarly, the print data generation PC 101 generates the print data 608 for the printing apparatus (2) 106 in the shared work area in the print data transmission PC(2) 104 (step S706). When the generation of the print data 608 is finished, the print data generation PC 101 notifies the print data transmission PC(2) 104 of the completion of the generation of the print data 608 (print data generation completion message) (step S707).

At this time, the application 601 in the print data generation PC 101, as described above, notifies the communication program 602 in the print data generation PC 101 that the generation of the print data 608 is finished. The communication program 602 then informs the print data transmission PC(2) 104 of the completion of the generation of the print data 608 (print data generation completion message).

Upon receiving the print data generation completion message (step S720), the communication program 605 in the print data transmission PC(2) 104 notifies the print data transmission program 606 of the completion of the generation of the print data 608. The print data transmission program 606 then reads the print data 608 from the shared work area (step S721) and send it to the printing apparatus (2) 106.

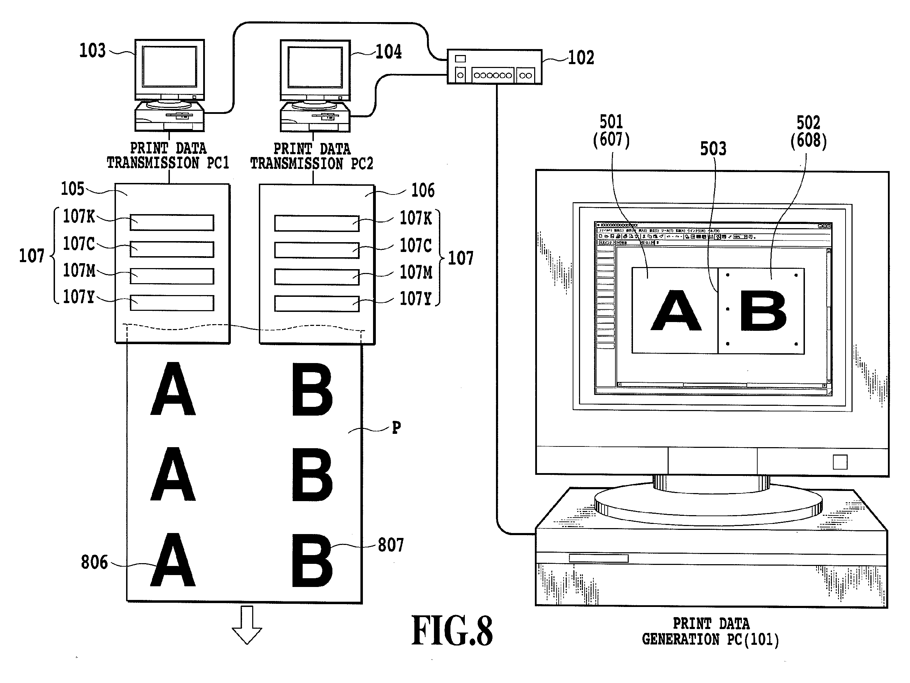

Fig. 8 shows a relation between the print data 607, 608 generated in the print data generation PC 101 and print image for the printing apparatuses 105, 106.

As described above, the print data 607, 608 are laid out in print areas 501, 503 on the screen of the print data generation PC 101. The print data 607 is one to be printed by the printing apparatus (1) 105 and is generated in the shared work area in the print data transmission PC(1) 103. The print data 608 is one to be printed by the printing apparatus (2) 106 and is generated in the shared work area in the print data transmission PC(2) 104.

The print data transmission PC(1) 103 sends the print data 607 to the printing apparatus (1) 105 according to the transport position of the print medium P, and the printing apparatus (1) 105 in turn prints an image 806 based on the print data 607. Similarly, the print data transmission PC(2) 104 sends the print data 608 to the printing apparatus (2) 106 according to the transport position of the print medium P, and the printing apparatus (2) 106 in turn prints an image 807 based on the print data 608.

In this example, the printing procedure has been explained for a case where two printing apparatuses 105 and 106 are used. It is also possible to use three or more printing apparatuses. In that case, a print data transmission PC may be provided to each of the printing apparatuses. Further, any desired arrangement of the plurality of printing apparatuses may be made and the print data can be laid out according to the arrangement of the printing apparatuses.

### (Second Embodiment)

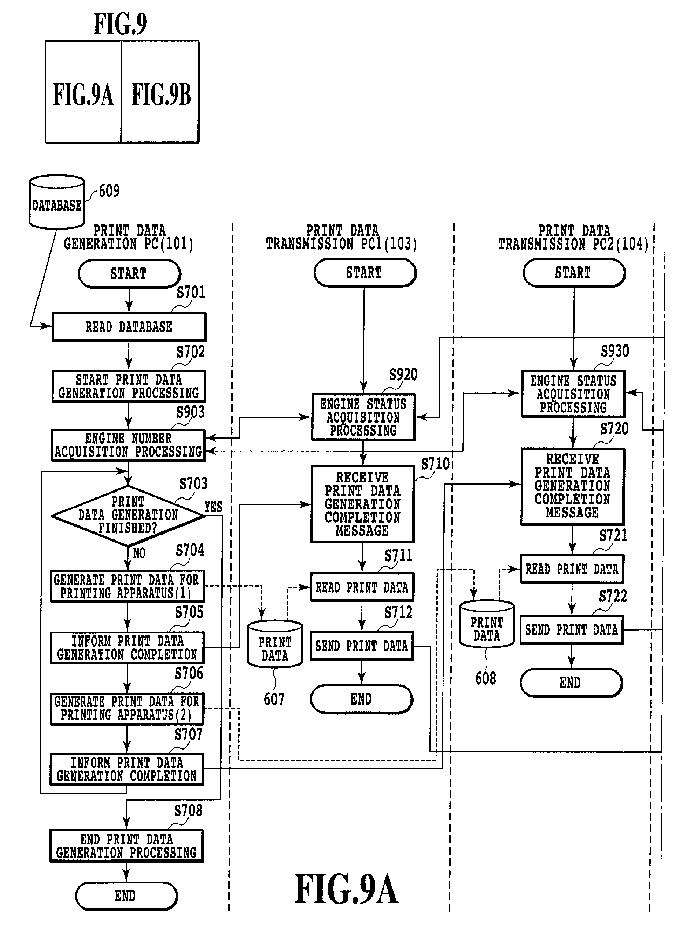

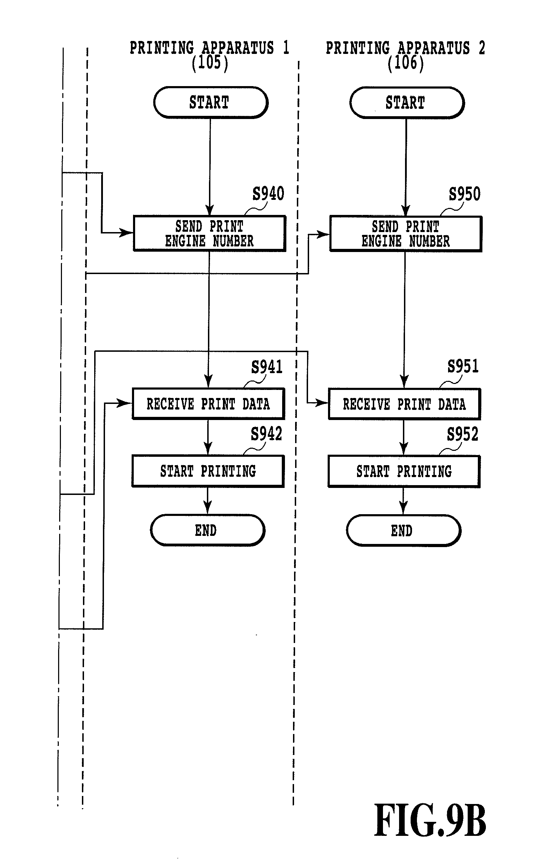

Fig. 9 is a flow chart showing a data transmission and reception procedure among the print data generation PC 101, the print data transmission PCs 103, 104 and the printing apparatuses 105, 106 in the second embodiment of this invention. In Fig. 9, processing similar to those shown in Fig. 7 are given like reference numerals and their explanations are omitted.

The application 601 in the print data generation PC 101, after the start of the print data generation processing (step S702), acquires engine numbers (printing apparatus numbers) for the printing apparatuses 105, 106 connected to the print data transmission PCs 103, 104 (step S903). That is, the print data generation PC 101 requests the print data transmission PCs 103, 104 to send engine numbers of the printing apparatuses 105, 106. Upon reception of the engine numbers transmitted from the printing apparatus 105, 106 (steps S940, S950), the print data transmission PCs 103, 104 send them to the print data generation PC 101 (steps S920, S930).

The print data generation PC 101 sends the generated print data to the shared work areas corresponding to the engine numbers acquired in step S903. That is, when sending the print data 607 for the printing apparatus (1) 105, the print data generation PC 101 sends the print data 607 to the shared work area in the print data transmission PC(1) 103 connected with the printing apparatus (1) 105 whose engine number is 1. When sending the print data 608 for the printing apparatus (2) 106, the print data generation PC 101 sends the print data 608 to the shared work area in the print data transmission PC(2) 104 connected with the printing apparatus (2) 106 whose engine number is 2.

These print data 607, 608 are transmitted from the print data transmission PCs 103, 104 to the printing apparatuses 105, 106, which, after receiving the print data 607, 608 (steps S941, S951), start printing (steps S942, S952).

As described above, in this embodiment, the use of the engine number as identification data of each printing apparatus allows the shared work areas, the destination of the print data, to be selected automatically without requiring the user to perform a special work. Further, in this example, the engine numbers assigned to the two printing apparatus are matched to the positions of the print areas on the print medium P allocated to the printing apparatuses. Suppose, for example, the printing apparatuses 105, 106 are arranged as shown in Fig. 1 and that the printing apparatus 105 is assigned the left-hand side print area in Fig. 1 and the printing apparatus 106 the right-hand side print area. The engine number of the printing apparatus 105 assigned the former print area is taken to be 1, and the engine number of the printing apparatus 106 assigned the latter print area is taken to be 2.

### (Third Embodiment)

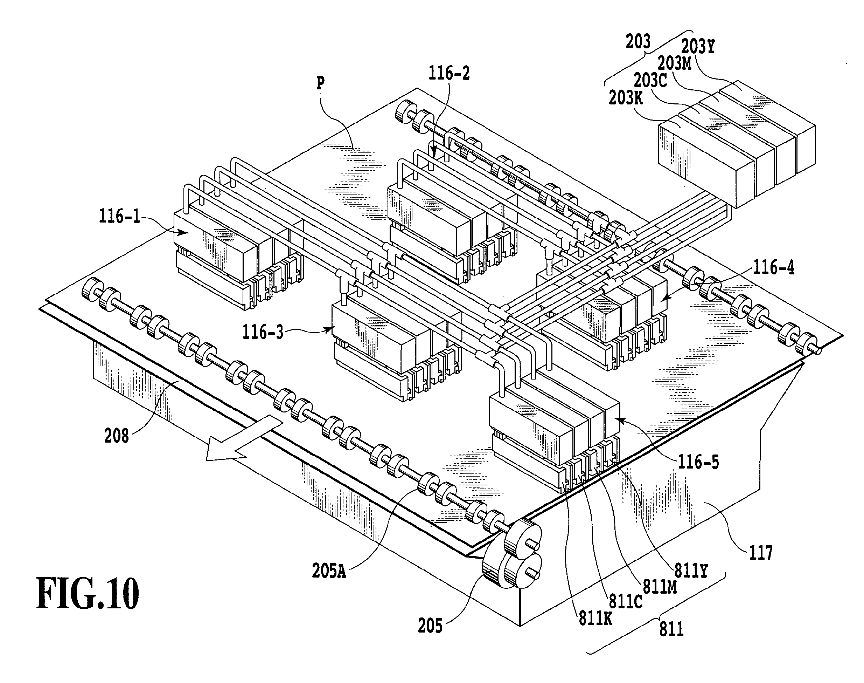

Fig. 10 illustrates an outline view of the third embodiment of this invention. A printing system of this example has five printer units or printing apparatus 116 (116-1 to 116-5). As in the preceding embodiment, these printing apparatuses are each connected to their associated print data transmission PCs (print data transmission apparatuses) not shown, which are in turn connected to a print data generation PC (print data generation apparatus) not shown.

Each of the printing apparatuses 116 has four ink jet print heads 811 (811Y, 811M, 811C, 811K) capable of ejecting four inks (yellow (Y), magenta (M), cyan (C), black (K)). These print heads 811 are supplied inks from the corresponding ink tanks 203 (203Y, 203M, 203C, 203K).

The five printing apparatuses 116 are supplied image data corresponding to their positions. That is, the print data generation PC divides the image data to be printed on the print medium P into five according to the print areas on the print medium P printed by the five printing apparatuses 116, and the five divided pieces of image data are sent from the five print data transmission PCs to the corresponding five printing apparatuses 116. A transport device 117 drives a row of transport rollers 205A by a transport motor 205 to feed the print medium P on a stage 208 in the direction of arrow. Each of the printing apparatuses 116 performs the printing operation according to the transport timing of the print medium P. That is, based on the image data received from the corresponding print data transmission PC, the individual printing apparatuses 116 execute the printing operations at appropriate transport timings determined by the transport device 117 to form images independently in print areas on the print medium P assigned to the printing apparatuses 116.

### (Fourth Embodiment)

The shared work area may be provided either on the print data generation PC (print data generation apparatus) side or on the print data transmission PC (print data transmission apparatus) side. The only requirement is that the shared work area is an area shared by both the print data generation PC (print data generation apparatus) and the print data transmission PC (print data transmission apparatus).

The print data in the shared work area may be output sequentially by the print data transmission PCs (print data transmission apparatuses) to the printing apparatuses according to print timings of printing apparatus, i.e., according to timings corresponding to the transport position of the print medium fed by the transport device. Alternatively, after the print data transmission PC (print data transmission apparatus) output the print data from the shared work area to the corresponding printing apparatus, the printing apparatus may check the print timing from the transport position of the print medium and perform the printing operation according to the print data. In that case, the printing apparatuses each have a data storage unit to store the print data from the shared work area and a function to set the print timing based on the transport position of the print medium.

### (Fifth Embodiment)

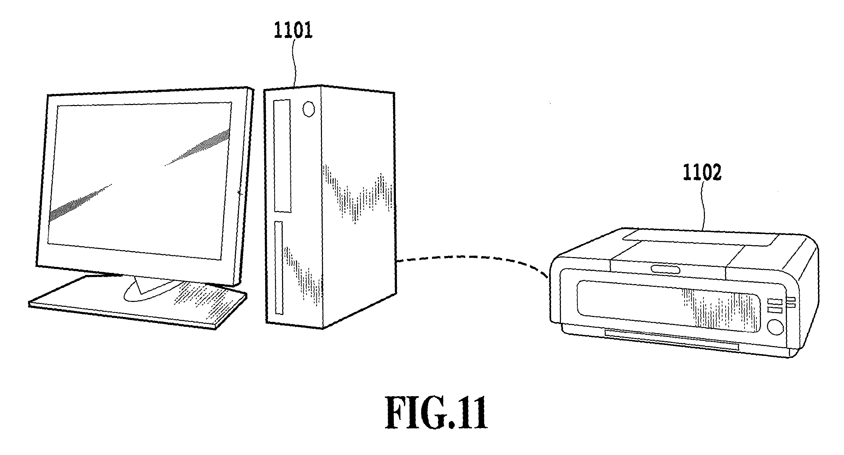

Figs. 11 to 15 represent a fifth embodiment of this invention. In this example, the printing system is constructed of a personal computer (PC) 1101 and a printer (printing apparatus) 1102.

The PC 1101, as described later, has a plurality of CPUs (central processing units) to control the generation of print data and the transfer of the print data to the printer 1102. The printer 1102 receives the print data from PC 1101 and prints it. That is, the printer 1102 forms an image on the print medium according to the print data received. The printer 1102 may be of any kind, such as ink jet type and thermal type, the only requirement being the ability to form an image based on the print data transferred from PC 1101.

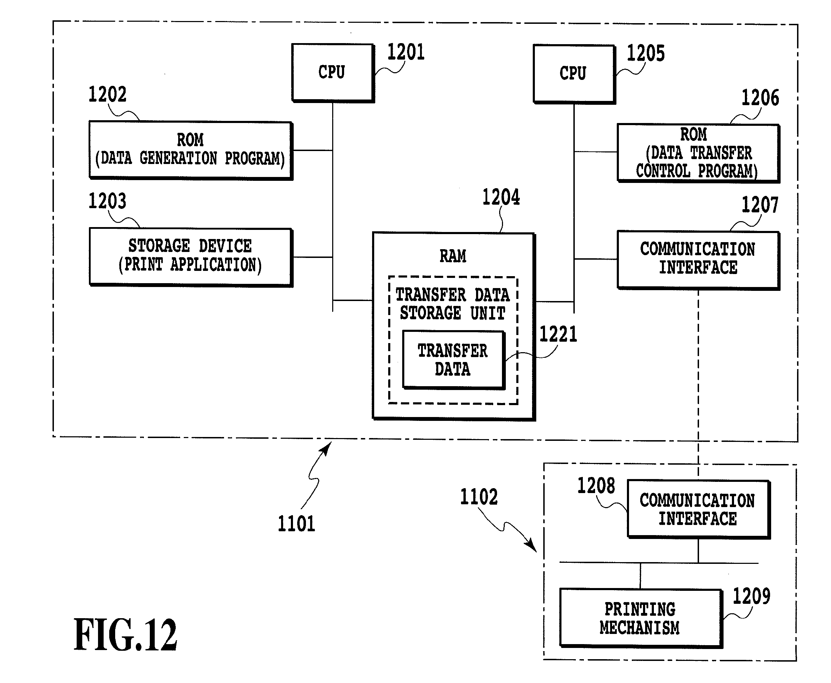

Fig. 12 shows an outline configuration of the printing system of this embodiment.

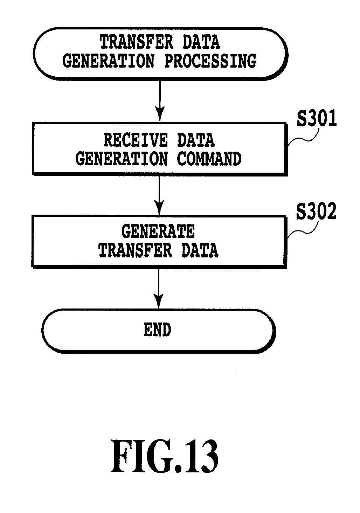

In the PC 1101, a CPU 1201 executes a data generation program stored in ROM 1202 to generate transfer data including print data. The data generation program executes transfer data generation processing, such as shown in Fig. 13, and is generally called a printer driver (program). In the transfer data generation processing, the CPU receives a data generation command from a print application (program) described later (step S301) and generates transfer data (including print data) according to the data generation command (step S302). Denoted 1203 is a storage device which stores the print application (program). The print application generates image data and has a function to issue a print command to the printer driver. Denoted 1204 is a RAM to store various data and has a transfer data storage unit to store transfer data 1221 generated at step S302.

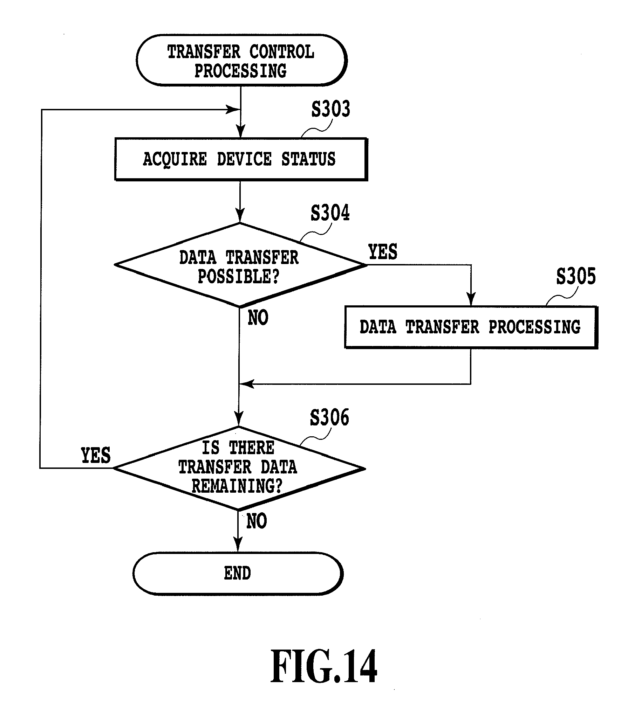

A CPU 1205 executes a data transfer control program stored in a ROM 1206 to perform transfer control processing described later with reference to Fig. 14. Denoted 1207 is a USB communication interface that communicates with a device to which data is to be transferred (in this example, printer 1102). In the transfer control processing of Fig. 14, the CPU 1205 receives status information on the printer 1102 (step S303) and decides whether the printer 1102 can receive print data (step S304). If it is decided that the print data can be transferred to the printer, the data transfer processing to transfer print data is executed (step S305). Then, a check is made as to whether there is any print data remaining in the RAM 1204. If so, program returns to step S303 where it checks the status of the printer 1102 and repeats the print data transfer processing.

In the printer 1102, denoted 1208 is a USB communication interface that receives data transferred via the USB communication interface 1207. Designated 1209 is a printing mechanism that performs a printing operation based on the print data transferred.

The PC 1101 as the information processing apparatus functions as the print data generation apparatus under the control of the CPU 1201 and as the print data transmission apparatus for the printer 1102 under the control of the CPU 1205. By having the print data generation apparatus and the print data transmission apparatus operate under the control of the different CPUs (central processing units), their functions can be executed efficiently, improving throughput of the system as a whole. The transfer data storage unit in the RAM 1204 is used as a shared work area by both the print data generation apparatus and the print data transmission apparatus. There may be more than two printers 1102 as in the preceding embodiment. In that case, a plurality of data transmission apparatuses corresponding to the respective printers are provided. The print data generation apparatus generates print data corresponding to each of the printers and stores them in shared work areas for the associated data transmission apparatuses. At least one of the data transmission apparatuses can be incorporated into the PC 1101 along with the print data generation apparatus.

As described above, the CPU 1205 successively sends the print data generated under the control of the CPU 1201 to the printer 1102, which in turn prints images successively according to the print data. The CPU 1205 manages the order of generating the print data under the control of the CPU 1201 and sends the print data to the printer 1102 in the same order as the data generation or in an arbitrary order. In either case, the printer 1102 needs only to be able to print an image corresponding to the print data. In addition to sending print data to the printer 1102 when the printer can receive the print data, as described above, the CPU 1205 can also execute a variety of processing according to the status information of the printer 1102. For example, when the printer 1102 cannot receive print data, the following processing may be performed: notifying the user that the printer 1102 cannot receive print data; enabling the printer 1102 to receive print data; waiting until the printer 1102 comes to be able to receive print data; transferring print data to other printer (a printer able to receive print data); and temporarily storing print data in a file.

As described above, the PC 1101 is a device having two or more CPUs and capable of communication with devices, such as printer 1102, to which data is to be transferred. The printer 1102 is a device having an interface 1208 to receive transfer data.

The means for storing the transfer data is not limited to the RAM 1204 and other storage means may be used, such as magnetic storage media (floppy disks, hard disks, magnetic tapes, etc.), optical discs (magnetooptical discs including MOs and PDs, CD-ROMs, CD-Rs, CD-RWs, DVD-ROMs, DVD-RAMs, DVD-Rs, DVD-RWs, DVD+RWs, etc.), semiconductor storages, paper tapes, and ROM devices. The interfaces 1207, 1208 are also not limited to USB and other types of interface may be used, such as serial interfaces including RC-232C, IrDA and IEEE1394, parallel interfaces including IEEE1284, SCSI and IDE, and a network interface.

### (Sixth Embodiment)

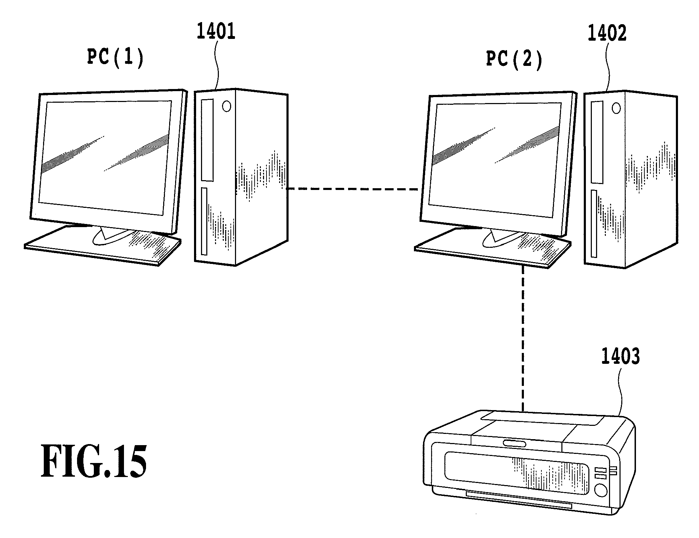

Figs. 15 to 19 represent a sixth embodiment of this invention. In this example, the printing system is constructed of personal computers (PCs) 1401, 1402 and a printer (printing apparatus) 1403.

In Fig. 15, the first PC 1401 performs transfer data generation processing described later and the second PC 1402 performs data transfer control processing described later. The former PC is also referred to as PC(1) and the latter PC(2). The printer 1403 forms an image based on the print data received from the PC(2) 1402.

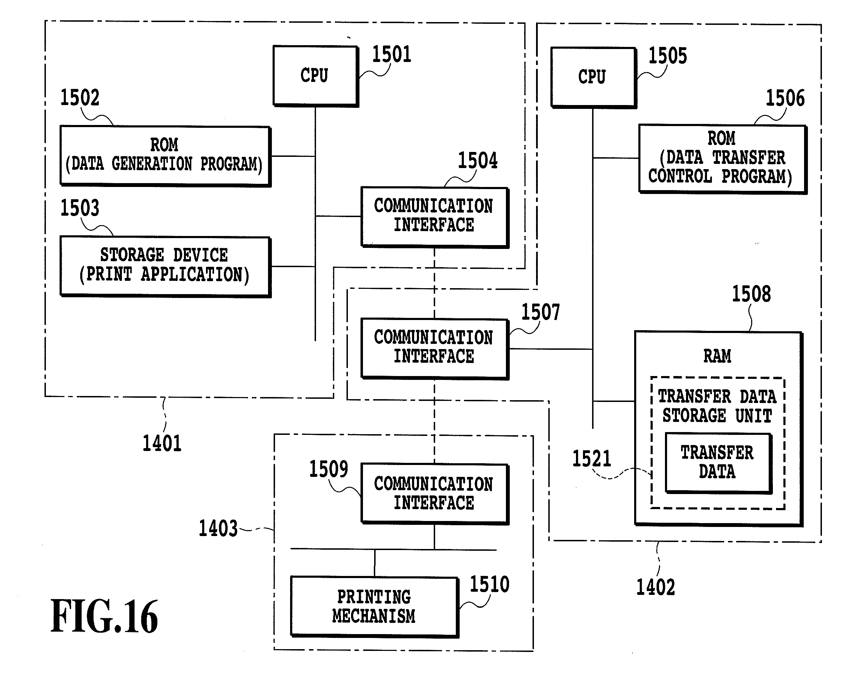

Fig. 16 shows an outline configuration of the printing system of this example.

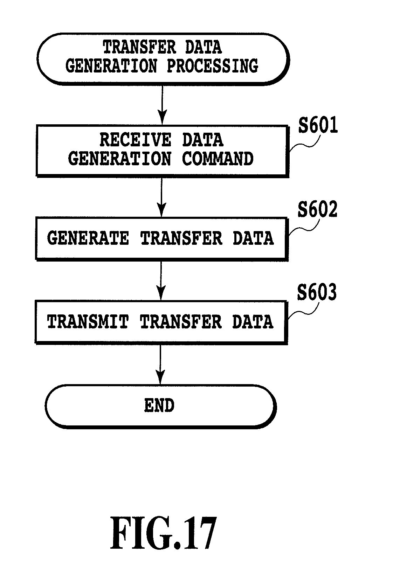

In the PC(1) 1401, a CPU 1501 executes a data generation program stored in a ROM 1502 to perform data generation processing described later with reference to Fig. 17. Denoted 1503 is a storage device that stores a print application. Designated 1504 is a USB communication interface that communicates with the PC(2) 1402.

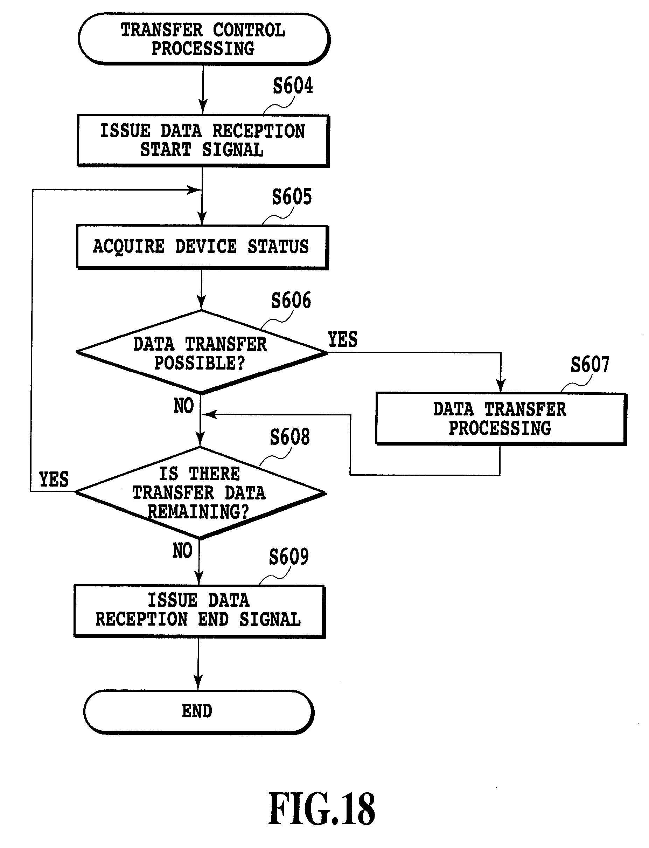

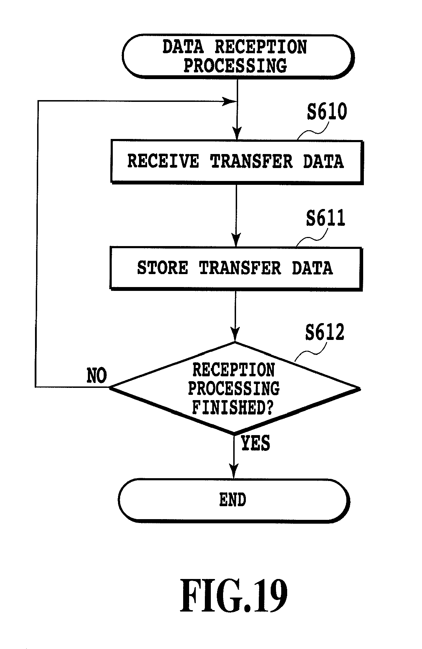

In the PC(2) 1402, a CPU 1505 executes a data transfer control program stored in a ROM 1506 to perform data transfer control processing of Fig. 18 and data reception processing of Fig. 19 both described later. Denoted 1507 is a USB communication interface that communicates with the PC(1) 1401 and a device to which data is to be transferred (in this example, the printer 1403). Denoted 1508 is a RAM having a transfer data storage unit in which to store transfer data 1521.

In the printer 1403, denoted 1509 is a USB communication interface that receives transfer data from the PC(2) 1402. Denoted 1510 is a printing mechanism that forms an image based on print data transferred.

Fig. 17 is a flow chart for the transfer data generation processing executed by the CPU 1501 of PC(1). Fig. 18 and Fig. 19 are flow charts showing transfer control processing and data reception processing executed by the CPU 1505 of PC(2) 1402. The processing of Fig. 17 and the processing of Fig. 18 and Fig. 19 are executed independently of each other.

In the transfer data generation processing of Fig. 17, the CPU receives a data generation command from the print application (step S601) and generates print data according to the command (step S602). Then, the print data is transferred to the PC(2) 1402 (step S603).

In the transfer control processing of Fig. 18, a data reception start signal to start the data reception processing of Fig. 19 described later is issued (step S604). Then a status of the printer 1403 is acquired (step S605) to check whether the printer 1403 can receive the print data. If the status check finds that the print data can be transferred, the data transfer processing to transfer the print data to the printer 1403 is executed in step S607. In step S608 a check is made as to whether there is any print data remaining in the RAM 1508. If some print data remains, the program returns to step S605 where it checks the printer status and repeats the print data transfer processing. When there is no remaining print data and the transfer control processing is to be ended, a data reception completion signal to end the data reception processing is issued (step S609).

The data reception processing of Fig. 19 is initiated upon receiving the data reception start signal issued in step S604 of Fig. 18 and repeats step S610 and step S611 until it receives the data reception completion signal issued in step S609 of Fig. 18. That is, the data reception processing repeats the data reception from PC(1) 1401 (step S610) and the storing of the received data in the RAM 1508 (step S611). When it receives the data reception completion signal, the data reception processing of Fig. 19 is ended.

The PC(1) 1401, an information processing device, functions as the print data generation apparatus under the control of CPU 1501 and the PC(2) 1402, another information processing device, under the control of CPU 1505 functions as the print data transmission apparatus for the printer 1403. As described above, by having the print data generation apparatus and the print data transmission apparatus operate under the control of different CPUs (central processing units), their performance can be enhanced and the throughput of the system as a whole improved. The transfer data storage unit in the RAM 1508 is used as the shared work area by the print data generation apparatus and the print data transmission apparatus. Further, it is possible to use two or more printers 1403 as in the preceding embodiment. In that case, a plurality of data transmission apparatuses are provided in one-to-one correspondence with the plurality of printers. The print data generation apparatus generates print data for each of the printers and stores them in the shared work areas in the respective data transmission apparatuses. At least one of the data transmission apparatuses can incorporated into the PC(2) 1402.

As described above, PC(1) 1401 and PC(2) 1402 together incorporate two or more CPUs and combine to form a device capable of data communication. The printer 1403 is a device with an interface for receiving data.

The transfer data storage means is not limited to the RAM 1508 and other storage means may be used, such as magnetic storage media (floppy disks, hard disks, magnetic tapes, etc.), optical discs (magnetooptical discs including MOs and PDs, CD-ROMs, CD-Rs, CD-RWs, DVD-ROMs, DVD-RAMs, DVD-Rs, DVD-RWs, DVD+RWs, etc.), semiconductor storages, paper tapes, and ROM devices. The interfaces 1504, 1507, 1509 are also not limited to USB and other types of interface may be used, such as serial interfaces including RC-232C, IrDA and IEEE1394, parallel interfaces including IEEE1284, SCSI and IDE, and a network interface.

### (Other Embodiments)

The system or apparatus of this invention may be supplied a program, that realizes the functions of the preceding embodiments described above, directly or remotely by the information transmission means. The information transmission means transmits information, for example, through storage media, wired signals via circuits and networks, or wireless signals of light and electromagnetic waves. The information processing unit in the form of a computer in the system or apparatus of this invention may first install the program from the information transmission means into a storage device, such as a hard disk drive, and then read it from the storage device for execution.

Therefore, the program codes themselves installed in the computer to realize the processing functions of the preceding embodiments constitute the present invention. That is, computer programs that realize the functions satisfying the conditions of claims of this specification are included in this invention. The programs may be of any type, such as an object code program that can be directly interpreted and executed by the processor, a program executed by an interpreter, or a program of script data type running on OS or application. "Storage media" that may be used to supply programs include, for example, magnetic storage media (floppy disks, hard disks, magnetic tapes, etc.), optical discs (magnetooptical discs including MOs and PDs, CD-ROMs, CD-Rs, CD-RWs, DVD-ROMs, DVD-RAMs, DVD-Rs, DVD-RWs, DVD+RWs, etc.), semiconductor storages, paper tapes, and ROM devices.

The method of supplying programs by means of transmission signals may involve, for example, accessing an Internet Web site or FTP server by using a client computer browser or FTP client. That is, a computer program itself that realizes the function of this invention or a file compressed and including an automatic installation function can be downloaded from a Web site or FTP server into storage media such as hard disks.

When the program of this invention is constructed of a plurality of small program files, the individual small program files may be downloaded from different Web sites or FTP servers. For example, if this invention requires, in addition to a program constituting a main part of this invention, small programs (e.g., dynamic link libraries and overlay programs) that operate in cooperation with the main program, the small programs may be downloaded from servers on the Internet. In that case, the small programs also form a constitutional element of the invention. Therefore, a server on the network that allows a plurality of users to download program files to realize the processing function of this invention in a computer is also included in this invention. The small programs include programs attached to electronic mails.

It is also possible to encrypt the program of this invention, store it in storage media such as CD-ROMs, distribute the storage media to users, and allow those users who meet predetermined conditions to download decryption key information from a home page on the Internet. In that case, the user can use the downloaded decryption key information to execute and install the encrypted program on the computer.

The computer can realize the functions of the embodiments of this invention described above by executing the program read from the storage media into the RAM. Further, the OS or driver program running on the computer may execute one of elements constituting the processing function of this invention or a part or all of one group of the constitutional elements. This invention includes whatever arrangement realizes the functions of the embodiments described above.

The present invention has been described in detail with respect to preferred embodiments, and it will now be apparent from the foregoing to those skilled in the art that changes and modifications may be made without departing from the invention in its broader aspect, and it is the intention, therefore, in the apparent claims to cover all such changes.

In forming an image by using a plurality of printing apparatuses, one print data generation apparatus is connected with a plurality of print data transmission apparatuses to reliably communicate print data between these apparatuses. For that purpose, a plurality of shared work areas are used each of which is shared by a print data generation PC (101) and a plurality of print data transmission PCs (103, 104). The print data generation PC (101) outputs a plurality of pieces of print data to the plurality of corresponding shared work areas. The plurality of print data transmission PCs (103, 104) transmit the print data in each of the shared work areas to the corresponding printing apparatus (105, 106).

## Claims

1. A printing system **characterized by** comprising:
a print data generation apparatus for generating image data;
a printing apparatus for forming an image in a print area on a print medium based on the image data; and
a print data transmission apparatus for transmitting the image data generated by the print data generation device to the printing apparatus; wherein
a plurality of the printing apparatuses are provided and allocated to print areas on the print medium and can form images in the respective print areas,
a plurality of the print data transmission apparatuses are provided for the plurality of the printing apparatuses respectively,
the print data generation apparatus can generate a plurality of pieces of the print data corresponding one-to-one to the plurality of the printing apparatuses,
a plurality of shared work areas are provided which are shared by the individual print data transmission apparatuses and the print data generation apparatus,
the print data generation apparatus outputs the individual pieces of the print data to the corresponding shared work areas, and
each of the print data transmission apparatuses sends the print data in the associated shared work area to the corresponding printing apparatus.

2. A printing system according to claim 1, **characterized in that** the print data generation apparatus has means for selecting the shared work area as a destination to which to output the print data.

3. A printing system according to claim 2, **characterized in that** the selection means has input means for inputting information from a user and, based on the information entered into the input means, selects the shared work area as an output destination of the print data.

4. A printing system according to claim 2, **characterized in that** each of the print data transmission apparatuses inputs identity data of its associated printing apparatus from the printing apparatus and outputs the identity data to the print data generation apparatus, and
**characterized in that** the selection means selects the shared work area as an output destination of the print data based on the identity data.

5. A printing system according to claim 1, **characterized in that** the print data generation apparatus includes a print data generation mode to generate the print data corresponding to all the plurality of print data transmission apparatuses.

6. A printing system according to claim 1, **characterized in that** the print data generation apparatus includes a print data generation mode to generate the print data corresponding to at least one of the plurality of print data transmission apparatuses.

7. A printing system according to claim 1, **characterized in that** the print data generation apparatus can generate the plurality of pieces of the print data on one and the same screen so that the pieces of print data are matched to the plurality of print areas on the print medium.

8. A printing system according to claim 1, **characterized in that** the print data generation apparatus is connected with the plurality of print data transmission apparatuses through a network cable.

9. A printing system according to claim 1, **characterized in that** the print data generation apparatus and the print data transmission apparatus operate under the control of different central processing units.

10. A printing system according to claim 1, **characterized in that** the print data generation apparatus cooperate with at least one print data transmission apparatus to form one information processing apparatus.

11. A printing system according to claim 1, **characterized in that** the print data generation apparatus and the print data transmission apparatus form different information processing apparatuses, and
**characterized in that** the shared work area is provided in one of the information processing apparatuses constructed of the print data generation apparatus and the print data transmission apparatus.

12. An information processing apparatus to generate a plurality of pieces of print data corresponding one-to-one to a plurality of printing apparatuses, output the plurality of pieces of print data to a plurality of print data transmission apparatuses corresponding one-to-one to the plurality of printing apparatuses and have the plurality of printing apparatus form an image in a print area on a print medium,
wherein the plurality of pieces of print data are print data used to form images in print areas on the print medium allocated one-to-one to the plurality of printing apparatuses, and
wherein the print data corresponding one-to-one to the plurality of print data transmission apparatuses are output to a plurality of shared work areas each shared by the information processing apparatus and each of the print data transmission apparatuses.

13. An information processing apparatus according to claim 12, further including selection means for selecting the shared work area as an output destination of the print data.

14. An information processing apparatus according to claim 12, functioning under the control of a central processing unit different from that of the print data transmission apparatus.

15. An information processing apparatus according to claim 12, combined with at least one of the print data transmission apparatuses.

16. A program to generate a plurality of pieces of print data corresponding one-to-one to a plurality of printing apparatuses, output the plurality of pieces of print data to a plurality of print data transmission apparatuses corresponding one-to-one to the plurality of printing apparatuses and have the plurality of printing apparatuses form an image in a print area on a print medium,
wherein the plurality of pieces of print data are print data used to form images in print areas on the print medium allocated one-to-one to the plurality of printing apparatuses, and
wherein the program causes a computer to output the print data corresponding one-to-one to the plurality of print data transmission apparatuses to a plurality of shared work areas each shared by the program and each of the print data transmission apparatuses.

17. A program according to claim 16, causing the computer to select the shared work area as an output destination of the print data.

18. A program according to claim 16, executed by a central processing unit different from that of the print data transmission apparatus.
